Europäisches Patentamt

European Patent Office

Office européen des brevets

(11) Veröffentlichungsnummer: **0 102 019**
**A2**

# (12) EUROPÄISCHE PATENTANMELDUNG

(21) Anmeldenummer: 83108025.4

(22) Anmeldetag: 13.08.83

(51) Int. Cl.³: **C 09 B 49/00**
**//D06P1/30**

(30) Priorität: 28.08.82 DE 3232063

(43) Veröffentlichungstag der Anmeldung:
07.03.84 Patentblatt 84/10

(84) Benannte Vertragsstaaten:
CH DE FR GB IT LI

(71) Anmelder: BAYER AG
Konzernverwaltung RP Patentabteilung
D-5090 Leverkusen 1 Bayerwerk(DE)

(72) Erfinder: Herzog, Helmut, Dr.
Am Benthal 22
D-5090 Leverkusen 3(DE)

(72) Erfinder: Hohmann, Walter, Dr.
Fontanestrasse 17
D-5090 Leverkusen 1(DE)

(54) Küpenfarbstoffe.

(57) Küpenfarbstoffe, die dadurch erhältlich sind, daß man ein Gemisch aus Anthracen und Phenanthren mit Schwefel, gegebenenfalls in Gegenwart eines Katalysators, bei erhöhter Temperatur umsetzt.

EP 0 102 019 A2

Croydon Printing Company Ltd.

0102019

BAYER AKTIENGESELLSCHAFT      5090 Leverkusen, Bayerwerk

Zentralbereich
Patente, Marken und Lizenzen   PG/by-c


Küpenfarbstoffe
_____


Die Erfindung betrifft Küpenfarbstoffe, die dadurch erhältlich sind, daß man ein Gemisch aus Anthracen und
Phenanthren mit Schwefel, gegebenenfalls in Gegenwart
eines Katalysators, bei erhöhter Temperatur umsetzt
sowie die Verwendung des so erhaltenen Farbstoffs
zum Färben von Baumwolle.

Die Herstellung von Schwefel- bzw. Schwefelküpenfarbstoffen aus Anthracen und Schwefel ist bekannt. Gemäß
der DE-PS 186 990 (Friedländer 9, S. 806, 1908-10)
gewinnt man durch Erhitzen von Anthracen (96-98 %ig)
mit Schwefel auf Temperaturen zwischen 250 und 350°C
Küpenfarbstoffe, die ungebeizte Baumwolle aus der
alkalischen Hydrosulfitküpe in gelbbraunen bis rotbraunen bis grünoliven Tönen färben.

In Bios Final Report 1155, S. 5 wird die Synthese des
Schwefelfarbstoffs Hydronoliv GX durch Erhitzen von
Anthracen mit Schwefel auf Temperaturen zwischen 270
und 295°C (Backverfahren) abgehandelt.


Le A 21 912-Ausland

Die neuen Küpenfarbstoffe sind dadurch erhältlich, daß man ein Gemisch aus Anthracen und Phenanthren, das daneben weitere Bestandteile enthalten kann, mit Schwefel, gegebenenfalls in Gegenwart eines Katalysators, bei erhöhter Temperatur umsetzt.

Als Katalysatoren eignen sich insbesondere Kupfersalze und ganz besonders Jod.

Vorzugsweise enthält das zu schwefelnde Gemisch 30 bis 70 Gew.-%, besonders bevorzugt 50 bis 65 Gew.-% Anthracen und 70 bis 30 Gew.-%, besonders bevorzugt 50 bis 35 Gew.-% Phenanthren, bezogen auf die Summe der Gewichte an Anthracen und Phenanthren. Ganz besonders bevorzugt setzt man das sogenannte Rohanthracen ein, das neben anderen Bestandteilen 45- 55 Gew.-% Anthracen und 40 - 50 Gew.-% Phenanthren, bezogen auf das Gesamtgewicht der Mischung enthält.

Ein als Ausgangsprodukt geeignetes Rohanthracen ist z.B. aus Ullmans Encyclopädie der techn. Chemie, 4. neubearb. Auflage, Band 7, S. 577 bekannt.

Pro Gewichtsteil Anthracen-Phenanthren-Gemisch werden vorzugsweise etwa 0,5 bis etwa 7 Gew.-Teile, besonders bevorzugt 1 bis 4 Gew.-Teile Schwefel eingesetzt.

Gegebenenfalls setzt man pro Gew.-Teil Anthracen-Phenanthren-Gemisch 0,001 bis 0,05 Gew.-Teile Katalysator ein.

Die Umsetzungstemperatur kann in einem größeren Bereich variiert werden; bevorzugt arbeitet man bei etwa 250 bis etwa 300°C.

Le A 21 912

Die Reaktionsdauer hängt von verschiedenen Faktoren ab und schwankt im allgemeinen zwischen 2 und 20 Stunden.

Das Ende der Reaktion läßt sich leicht durch Dünnschicht-chromatographie von Proben, die von Zeit zu Zeit dem Reaktionsgemisch entnommen werden, ermitteln.

Die Herstellung des neuen Küpenfarbstoffs kann technisch besonders günstig in einem Schaufeltrockner durchgeführt werden.

Prinzipiell können die neuen Küpenfarbstoffe auch in der Kochschmelze nach an sich bekannten Verfahren erhalten werden, indem man das Anthracen-Phenanthren-Gemisch mit Schwefel und/oder Alkalipolysulfid, insbesondere Natriumpolysulfid, in wäßrigem Medium oder in einem organischen Lösungsmittel wie Ethylenglykol bei erhöhter Temperatur umsetzt (s. z.B. O. Lange, "Die Schwefelfarbstoffe, ihre Herstellung und Verwendung" (1912), S. 208-220 und S. 223-225; Venkataraman, "The Chemistry of Synthetic Dyes", Band 2 (1952), S. 1062 ff. und S. 1103 ff. sowie ibid. Band 7 (1974); S. 24 ff, Academic Press, New York, San Francisco, London).
Besonders bevorzugt ist jedoch die Herstellung in der sogenannten Backschmelze.

Um überschüssigen Schwefel zu entfernen kann das Reaktionsprodukt in üblicher Weise nachbehandelt werden. So lassen sich durch Ausrühren der Rohmasse mit siedendem Toluol sowohl der überschüssige Schwefel als auch lösliche organische Bestandteile entfernen. Nach Abdestillieren des Toluols wird aus dem Sumpf ein ca. 90 %iger Rohschwefel isoliert, der erneut in das erfindungsgemäße Verfahren eingeschleust werden kann.

Le A 21 912

Die Entfernung von freiem, überschüssigem Schwefel aus dem Backrohprodukt kann z.B. auch mit warmer, wäßriger Natriumsulfidlösung erfolgen.

Überraschenderweise sind die erfindungsgemäß erhältlichen Küpenfarbstoffe im Vergleich zu den bekannten deutlich farbstärker; sie färben Baumwolle aus der Dithionitküpe in kräftigen Khakitönen. Die Färbungen zeichnen sich weiterhin durch gute Wasch- und Lichtechtheiten aus. Bedeutsam ist auch, daß sich die neuen Küpenfarbstoffe sehr ökonomisch herstellen lassen.

Bei den Prozentangaben in den folgenden Beispielen handelt es sich um Gewichtsprozente.

Le A 21 912

0102019

## Beispiel 1

a) In einem 1 l Planschliffbecher mit Ankerrührer, Luftkühler mit Abgasleitung und Innenthermometer wird ein Gemisch aus 600 g Schwefel und 180 g Rohanthracen (55 % Anthracen, 40 % Phenanthren) gemahlen und innerhalb von 1,5 Stunden von 25° auf 260°C erhitzt, wobei eine gut rührbare Schmelze entsteht.

Anschließend hält man solange auf 260-270°C, bis die $H_2S$-Entwicklung beendet ist und eine dem Reaktionsgemisch entnommene Probe dünnschichtchromatographisch weniger als 5 % Anthracen/Phenanthren enthält (Dauer ca. 8 Stunden).

Die Reaktionsschmelze ist nach ca. 75 Minuten (260 bis 270°C) aufgrund ihrer Viskosität nicht mehr rührbar, d.h. das weitere Reaktionsgeschehen vollzieht sich in einer Backschmelze. Nach dem Abkühlen wird das Reaktionsprodukt zerkleinert, gemahlen und gesiebt. Erhalten werden 695 g Rohprodukt.

b) Die Rohware aus a) erhitzt man unter gutem Rühren mit 3,5 l Toluol 30 Minuten zum Rückfluß, saugt heiß über eine 1 l G3-Fritte ab, wäscht mit 3,5 l heißem Toluol nach und trocknet bei 100°C im Vakuum.

Le A 21 912

Ausbeute: 268 g eines Rohfarbstoffs, der ca. 52 %
Schwefel enthält (1-2 % freier Schwefel gemäß Dünnschichtchromatogramm).

Toluol kann durch Destillation zu 90-95 % wiedergewonnen werden. Aus dem Sumpf läßt sich ca. 70 %
des eingesetzten Schwefels in Form einer 90 %igen
Ware isolieren, die wiederverwendet werden kann.

Bei der Färbung auf Baumwolle liefert der formierte
Farbstoff aus der Dithionitküpe ein kräftiges, farbstarkes Khaki mit guter Licht- und Waschechtheit.

c)  Das Rohprodukt aus a) behandelt man 3 Stunden lang
bei 60 bis 70°C mit 695 g $Na_2S \cdot 3H_2O$ und 3,5 l Wasser.
Nachfolgend saugt man heiß ab, wäscht mit heißem
Wasser neutral und trocknet bei 100°C.

Ausbeute: 288 g Rohfarbstoff, der 43 % Schwefel enthält (kein freier Schwefel nach Dünnschichtchromatogramm vorhanden) und Baumwolle kräftig Khakifarben
anfärbt.

Beispiel 2

Arbeitet man gemäß Beispiel 1a), setzt aber dem Reaktionsgemisch zusätzlich noch 1,8 g Jod als Katalysator
zu, so wird nach Behandeln des Rohprodukts mit Toluol
oder Natriumsulfid gemäß Beispiel 1b) oder 1c) ein

Le A 21 912

Küpenfarbstoff gewonnen, der Baumwolle ebenfalls in einem echten, farbstarken Khakiton anfärbt.

## Beispiel 3

In einem 5 l Schaufeltrockner wird ein Gemisch aus 100 g Schwefel, 300 g Rohanthracen und 3 g Jod 12 Stunden auf 270-300°C (Vorlauftemperatur) erhitzt.

Ausbeute: 1125 g Rohprodukt.

Durch Entfernen des überschüssigen Schwefels mit Toluol oder Natriumsulfid gemäß Beispiel 1b) oder 1c) wird ein Küpenfarbstoff erhalten, der Baumwolle in einer echten, kräftigen Khaki-Nuance anfärbt.

Le A 21 912

**0102019**

## Patentansprüche

1. Küpenfarbstoffe, die dadurch erhältlich sind, daß man ein Gemisch aus Anthracen und Phenanthren mit Schwefel, gegebenenfalls in Gegenwart eines Katalysators, bei erhöhter Temperatur umsetzt.

2. Küpenfarbstoffe gemäß Anspruch 1, die dadurch erhältlich sind, daß das zu schwefelnde Gemisch 30 bis 70 Gew.-%, vorzugsweise 50 bis 65 Gew.-% Anthracen und 70 bis 30 Gew.-%, vorzugsweise 50 bis 35 Gew.-% Phenanthren, bezogen auf die Summe der Gewichte an Anthracen und Phenanthren, enthält.

3. Küpenfarbstoffe gemäß Anspruch 1, dadurch erhältlich, daß man als zu schwefelndes Gemisch Rohanthracen einsetzt, das 45 - 55 Gew.-% Anthracen und 40 - 50 Gew.-% Phenanthren enthält.

4. Küpenfarbstoffe gemäß den Ansprüchen 1-3, dadurch erhältlich, daß man pro Gewichtsteil Anthracen-Phenanthren-Gemisch etwa 0,5 bis etwa 7 Gew.-Teile, vorzugsweise 1 bis 4 Gew.-Teile Schwefel einsetzt.

5. Küpenfarbstoffe gemäß den Ansprüchen 1 bis 4, dadurch erhältlich, daß man die Umsetzung bei etwa 250 bis etwa 300°C vornimmt.

Le A 21 912

6.  Küpenfarbstoffe gemäß den Ansprüchen 1 bis 5, dadurch erhältlich, daß man die Umsetzung in Anwesenheit von etwa 0,001 bis etwa 0,05 Gew.-Teilen Katalysator pro Gew.-Teil Anthracen-Phenanthren-Gemisch durchführt.

7.  Küpenfarbstoffe gemäß den Ansprüchen 1 bis 6, dadurch erhältlich, daß man die Umsetzung in einem Schaufeltrockner durchführt.

8.  Küpenfarbstoffe gemäß den Ansprüchen 1 bis 7, dadurch erhältlich, daß man das rohe Umsetzungsprodukt durch Behandeln mit Toluol oder wäßriger Natriumsulfidlösung von überschüssigem Schwefel befreit.

9.  Küpenfarbstoffe gemäß den Ansprüchen 1 - 8, dadurch erhältlich, daß man die Umsetzung in Gegenwart von Jod oder Kupfersalzen als Katalysatoren durchführt.

10. Küpenfarbstoffe gemäß den Ansprüchen 1 - 9, dadurch erhältlich, daß man die Umsetzung in der Backschmelze vornimmt.

Le A 21 912